(19) Europäisches Patentamt
European Patent Office
Office européen des brevets

(11) **EP 1 718 062 B1**

(12) **EUROPEAN PATENT SPECIFICATION**

(45) Date of publication and mention
of the grant of the patent:
**21.01.2015 Bulletin 2015/04**

(51) Int Cl.:
*H04N 5/232* (2006.01)    *B60R 1/00* (2006.01)
*B60R 11/02* (2006.01)    *G03B 5/00* (2006.01)
*G03B 15/00* (2006.01)    *G03B 17/56* (2006.01)
*H04N 5/225* (2006.01)    *H04N 7/18* (2006.01)

(21) Application number: **05710237.8**

(22) Date of filing: **16.02.2005**

(86) International application number:
**PCT/JP2005/002287**

(87) International publication number:
**WO 2005/079060 (25.08.2005 Gazette 2005/34)**

(54) **OPERATION SUPPORT DEVICE**

BETRIEBSUNTERSTÜTZUNGSVORRICHTUNG

DISPOSITIF DE SUPPORT DE FONCTIONNEMENT

(84) Designated Contracting States:
**DE**

(30) Priority:  **16.02.2004   JP 2004038640**

(43) Date of publication of application:
**02.11.2006   Bulletin 2006/44**

(73) Proprietor: **Panasonic Corporation
Kadoma-shi
Osaka 571-8501 (JP)**

(72) Inventors:
• **ISHII, Hirofumi
c/o Matsushita El. Ind. Co., Ltd.
Chuo-ku, Osaka-shi, Osaka 540-6319 (JP)**

• **MIZUSAWA, Kazufumi
c/o Matsushita El Ind Co, Ltd
Chuo-ku, Osaka-shi, Osaka 540-6319 (JP)**
• **OKADA, Tuyoshi
c/o Matsushita El. Ind. Co., Ltd.
Chuo-ku, Osaka-shi, Osaka 540-6319 (JP)**

(74) Representative: **Pautex Schneider, Nicole
Véronique et al
Novagraaf International SA
Chemin de l'Echo 3
1213 Onex (CH)**

(56) References cited:
**WO-A1-01/21446        JP-A- 3 260 781
JP-A- 9 312 836        JP-A- 2003 063 310
US-A1- 2002 036 692**

**Description**

TECHNICAL FIELD OF THE INVENTION

This invention relates to an operation support device, and more particularly to an operation support device for taking images of one or more objects located around an automotive vehicle, and having a displaying unit inside the automotive vehicle display the images on a screen.

DESCRIPTION OF THE RELATED ART

Conventionally, there has been used mirrors such as for example fender mirrors, back mirrors and the like to help a driver easily monitor objects positioned at dead angles formed by the backward portion, the both sides of the backward portion, and the both sides of the forward portion of the automotive vehicle. In recent years, one or more cameras are considered to be used together with these mirrors for the same purpose. These cameras are adapted to take an image of objects located around the automotive vehicle to be displayed on a displaying unit inside the automotive vehicle to assist the driver in the driving operation of the automotive vehicle.

One of the technologies of this kind is disclosed for example by a Patent Publication No. **1** in which a camera used for the automotive vehicle is adapted to monitor the backward portion of the automotive vehicle to assist the driver in the driving operation of the automotive vehicle moving backwardly. The cameras of this type are considered to be mounted on one or more portions of the automotive vehicle depending upon the type of the camera.

Another technology of this kind is disclosed by a Patent Publication No. **2** as comprising a rod-like member having at its top end a lens and an image taking element which are adapted to take an image of objects surrounding the automotive vehicle for the driver to easily monitor the surrounding objects of the automotive vehicle with his or her viewing points relatively high in degrees of freedom, thereby securing a still further enhanced safety to the driver when driving the automotive vehicle.

The technology of the Patent Publication No. **2** encounters such a problem that the lens and the image taking element mounted on the top end of the rod-like member causes the rod-like member to be swung freely, thereby generating an image vibrated on the displaying unit.

As one of the technologies to overcome the foregoing vibrated image on the displaying unit, there is known by a Patent Publication No. **3** which does not necessarily teach how the known technology is applied to the automotive vehicle. The technology disclosed in the Patent Publication No. **3** comprises a monitoring camera mounted on an extendible and contractible rod member, a position setting apparatus for setting a monitoring position for the monitoring camera to take an image of the objects surrounding the automotive vehicle, and a standard image setting apparatus for setting a standard image serving as a standard target to be monitored on the displaying unit. The monitoring camera disclosed in the Patent Publication No. **3** comprises a frame memory unit for memorizing the monitored image of the standard target taken by the monitoring camera to be inputted through the lens, a detection area designating unit for designating a detection area among areas of the monitoring image extending on the image displaying means, a correlation control apparatus for updating the content of the memory unit when determining that the correlation between the monitored image and the standard image exists in accordance with the image on the detection area on the image displaying means, to ensure that the monitored image is prevented from being vibrated to appear on the image displaying means to enhance the effectiveness of the monitoring operation by the technology disclosed in the patent publication No. **3**.

     Patent Publication No. **1**: Tokkaihei No. 2-36417 Publication
     Patent Publication No. **2**: Tokkai No. 2003-63310 Publication
     Patent Publication No. **3**: Tokkaihei No. 09-312836 Publication

DISCLOSURE OF THE INVENTION

PROBLEMS TO BE SOLVED BY THE INVENTION

The technology of the Patent Publication No. **3,** however, encounters such a problem that the rod member causes the targeted objects such as the road surface, other neighboring automotive vehicles and other obstacles surrounding the automotive vehicle to be moved within the monitoring image displayed on the display unit in accompaniment with the movement of the automotive vehicle driven by the driver, thereby making it impossible for the monitoring image to be prevented from being vibrated on the displaying unit.

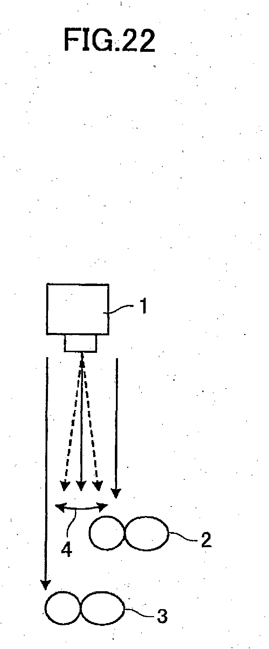

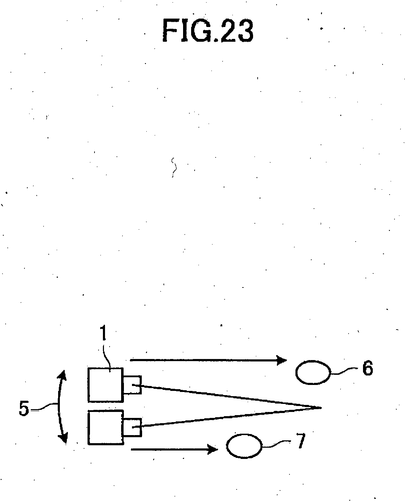

For this end, there has so far been proposed a moving camera and others which are devised to be operated with a swing compensation in such a way that the swing compensation for a wing **4** with the view point position being kept constant and with only the view line being rotated as seen from FIG. **22** is carried out by an optical system forming part of the image taking apparatus **1** and other image processing methods of the image taking apparatus **1**. The swing compensation **1** for the swing **4** is effective, resulting from the same swing of the targeted object **2** as that of the targeted object **3** on the displaying unit though the targeted objects **2** and **3** differ from each other in distance from the image taking apparatus **1**. The rod member is, however, swung with its view position being swung in a direction **5** shown by an arrow in FIG. **23,** resulting in the fact that the targeted objects 6 and 7 different in distance from the image taking apparatus 1 are displayed on the displaying unit with the effect of the targeted objects **6** and **7,** i.e., the swing amounts of the targeted objects **6** and **7** being different in distance from the image taking apparatus **1**. This means that the conventional compensation method is generally not effective to the above case.

The present invention is made for the purpose of solving these problems, and to provide an operation support device which can produce an image to be displayed on a screen at a relatively high quality without being affected by the swing of the rod-like retaining means.

MEANS FOR SOLVING THE PROBLEMS

The operation support device according to the present invention comprises: retaining means in the form of a rod and projected from an automotive vehicle; image taking means mounted on and retained by said retaining means to take images of objects around said automotive vehicle; and swing compensation image processing means for processing said images taken by said image taking means with a swing compensation amount corresponding to a swing on a special distance plane distant from said image taking means.

The operation support device thus constructed can advantageously produce an excellent quality of image, resulting from the fact that the swings of the images of the objects to be monitored on the special surface distant from the image taking means, for example, the targeted objects on a road surface is lessened to a level as small as possible even if the rotational and positional swings of the image taking means are caused by the swings of the rod-like retaining means.

In the operation support device according to the present invention, the swing compensation image processing means is adapted to detect a rotational swing and a positional swing of the image taking means mounted on the rod-like retaining means by chasing two or more particular points defined on the automotive vehicle 11, and to compensate the image by canceling the effect of the rotational and positional swings of the image taking means on the special distance plane.

The swing compensating image processing means forming part of the operation support device according to the present invention thus constructed can chase a plurality of particular points set on the automotive vehicle while detecting the rotational and positional swings of the image taking means mounted on the retaining means to ensure that the effects of the images of the targeted objects on the special plane distant from the image taking means caused by the rotational and positional swings of the image taking means are cancelled and compensated with each other. It is therefore to be understood that the swings of the images of the objects to be taken on the special surface distant from the image taking means, for example, the targeted objects on a road surface can be lessened to a level as small as possible, thereby making it possible to produce an excellent quality of image on the displaying unit.

The operation support device according to the present invention further comprises detecting means for detecting a rotational swing and a positional swing of the image taking means. The swing compensation image processing means is adapted to compensate the image by canceling the effect of the rotational and positional swings of the image taking means on the special distance plane.

The operation support device according to the present invention thus constructed can produce an excellent quality of image on the displaying unit by directly detecting the rotational and positional swings of the image taking unit to cancel and compensate the swings of the images of the targeted objects positioned on a special plane, for example a road surface, spaced apart from the image taking means, thereby making the swings lessened to a level as small as possible.

In the operation support device according to the present invention, the swing compensation image processing means is adapted to perform a projective transformation of the taken image to an image projected on a special distance plane before performing an inverse projective transformation to an image to be outputted as an image taken with no swing by an imaginary image taking means.

The operation support device according to the present invention thus constructed can produce an excellent quality of image on the displaying unit by having the projected and transformed image transformed into an inversely projected and transformed image on the imaginary image taking means after having the images of the targeted objects on the special plane spaced apart from the image taking means projected and transformed, thereby making it possible to compensate the effect of the positional and rotational swings of the image taking means between the operation of projecting and transforming the images and the operation of inversely projecting and transforming the images.

The operation support device according to the present invention further comprises distance means for detecting a distance between the object and the image taking means. The swing compensation image processing means is adapted to change the special distance plane on the basis of the distance between the object and the image taking means.

The operation support device according to the present invention thus constructed can produce an excellent quality of image on the displaying unit by changing the special plane from the road surface to the height of a bumper forming part of the automotive vehicle when obstacles such as for example the bumper forming part of the other automotive vehicle comes to enter the range of the images to be currently taken by the image taking unit so that the obstacles such as the bumper forming part of the other automotive vehicle which are more important as a target to be monitored than the road surface can be displayed on the image displaying means in a state to easily monitor the image of the bumper on the image displaying means.

In the operation support device according to the present invention, the swing compensation image processing means is adapted to produce images compensated on respective distance planes by canceling the effect of the rotational and positional swings of the image taking means on the distance planes, and to select, as an image to be synthesized, one of the images compensated on the respective distance planes by judging whether or not each of the images compensated on the respective distance planes corresponds to an predictive image which is produced from one or more prior images on the basis of a movement of the automotive vehicle.

The swing compensating image processing means forming part of the operation support device according to the present invention thus constructed can make a decision on whether the compensated image obtained by compensating the positional and rotational swings of the image taking means on a plurality of distance plane spaced apart form the image taking means is in registry with an estimated image estimated from the images obtained in the past from the movements of the automotive vehicle, so that the obstacles and the road surface can partly be displayed on the image displaying means in a state to easily monitor the image even when the obstacles comes to enter the range of the images to be currently taken by the image taking meas.

The operation support device according to the present invention further comprises oscillation means for swinging the rod-like retaining means. The swing compensation image processing means is adapted to detect the special distance plane with the swing of the image taking means under the condition that the rod-like retaining means is being swung by the oscillation means.

The operation support device according to the present invention thus constructed can allow the rod-like retaining means to be oscillated by the oscillation means to cause the image taking means to be positionally swung and to cause the image on the image displaying means to be swung at its swing amount corresponding to the amount of the oscillation of the image taking means to detect the special distance plane from the image taking means from the swing amount of the image on the image displaying means so that the operation support device can detect whether the special distance plane is the road surface or the obstacle.

The operation support device according to the present invention further comprises displaying means for displaying the image taken by the image taking means.

The operation support device thus constructed can help a driver easily monitor a surrounding situation of the automotive vehicle to secure the driver's safety to a much higher level.

ADVANTAGEOUS EFFECT OF THE INVENTION

From the foregoing description, it will be understood that the operation support device according to the present invention can produce an image to be displayed on a screen at a relatively high quality without being affected by the swing of the rod-like retaining means.

BRIEF DESCRIPTION OF THE DRAWINGS

[FIG. 1]

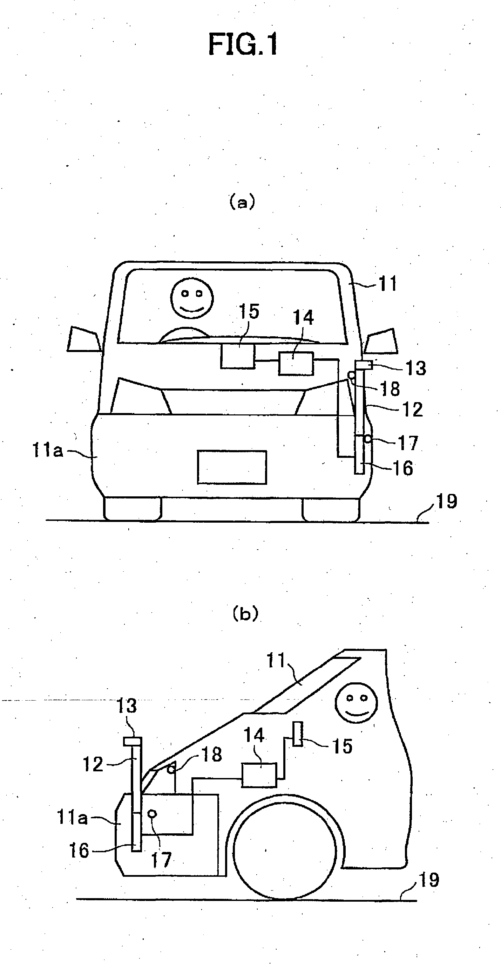

FIGS. **1** are schematic views of the first embodiment of an operation support device according to the present invention, **(a)** showing a schematic front view of an automotive vehicle having a rod portion held in its extended state, **(b)** showing a schematic side view of the automotive vehicle having a rod portion held in its extended state;
[FIG. 2]

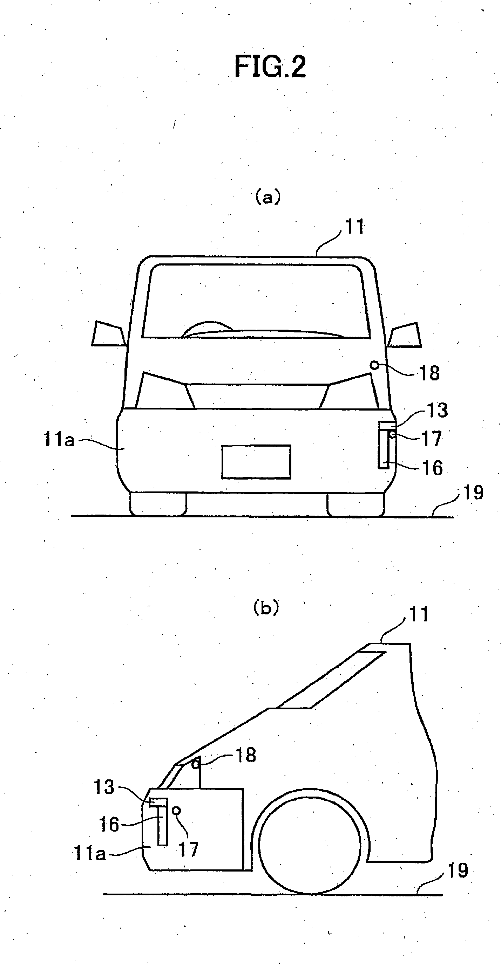

FIGS. **2** are schematic views of the first embodiment of the operation support device according to the present invention, **(a)** showing a schematic front view of an automotive vehicle having a rod portion held in its contracted state, **(b)** showing a schematic side view of the automotive vehicle having a rod portion held in its contracted state;
[FIG 3]

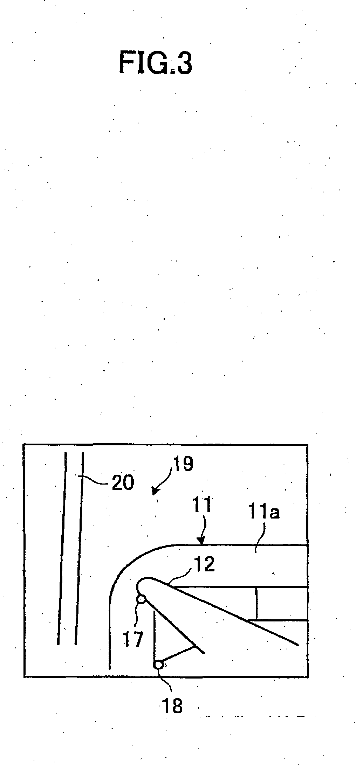

FIG. **3** is a schematic view showing an image taken by the camera forming part of the first embodiment of the operation support device according to the present invention;
[FIG 4]

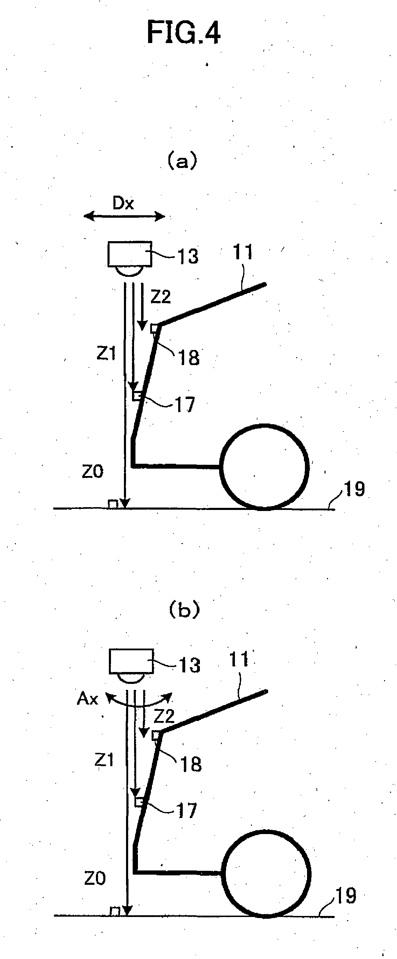

FIGS. **4(a)** and **4(b)** are explanation views for explaining a method of estimating the swings on the road surface by chasing two particular points in the image displayed by image displaying means forming part of the operation support device according to the present invention;

[FIG. 5]

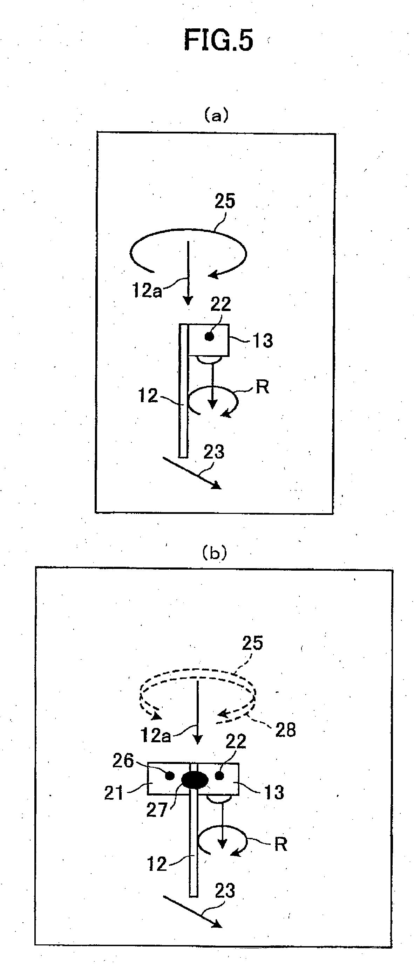

FIGS. 5 are schematic views each showing a camera and a counter weight mounted on the rod portion forming of the first embodiment of the operation support device according to the present invention;

[FIG. 6]

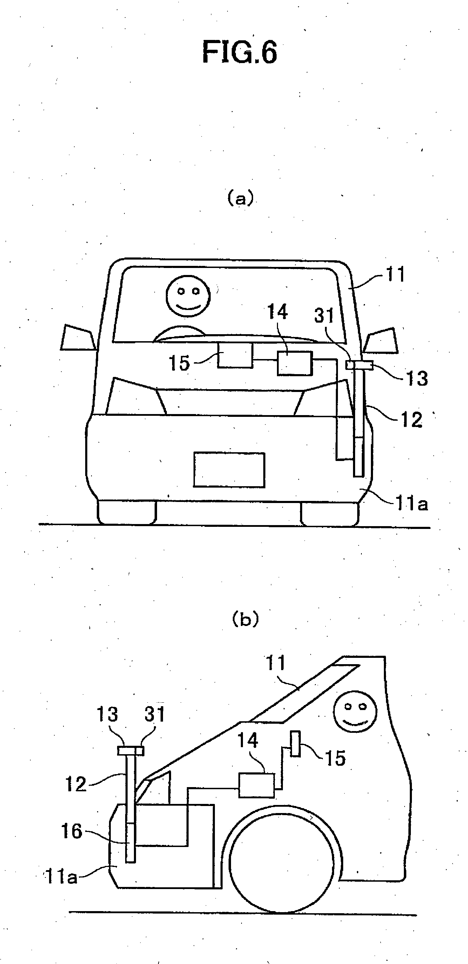

FIGS. **6** are schematic views of the second embodiment of an operation support device according to the present invention, (**a**) showing a schematic front view of an automotive vehicle having an operation support device, (**b**) showing a schematic side view of the automotive vehicle having the operation support device;

[FIG. 7]

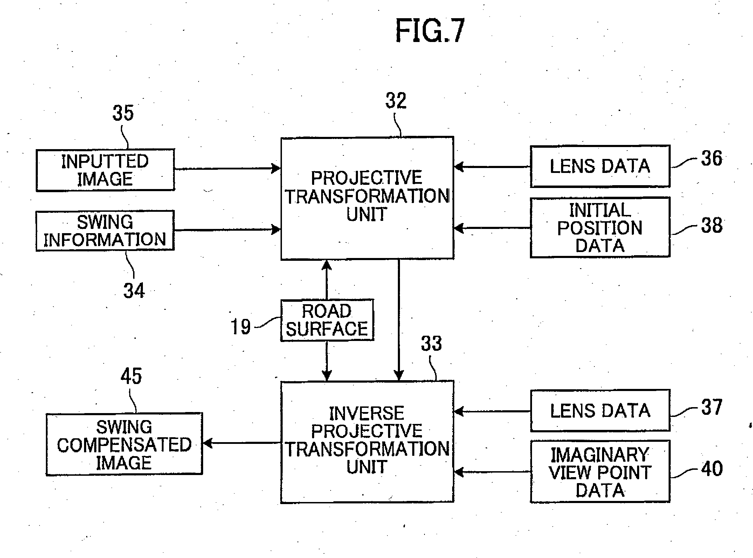

FIG **7** is a block diagram of the second embodiment of the operation support device according to the present invention;

[FIG. 8]

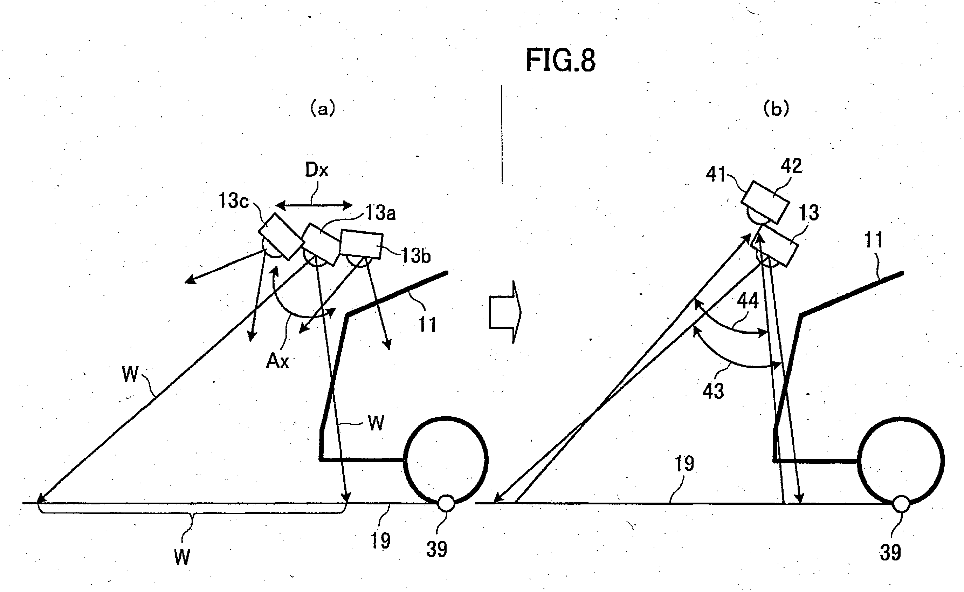

FIGS. **8(a)** and **8(b)** are explanation views for explaining an operation to compensate the swings with the second embodiment of the operation support device according to the present invention;

[FIG. 9]

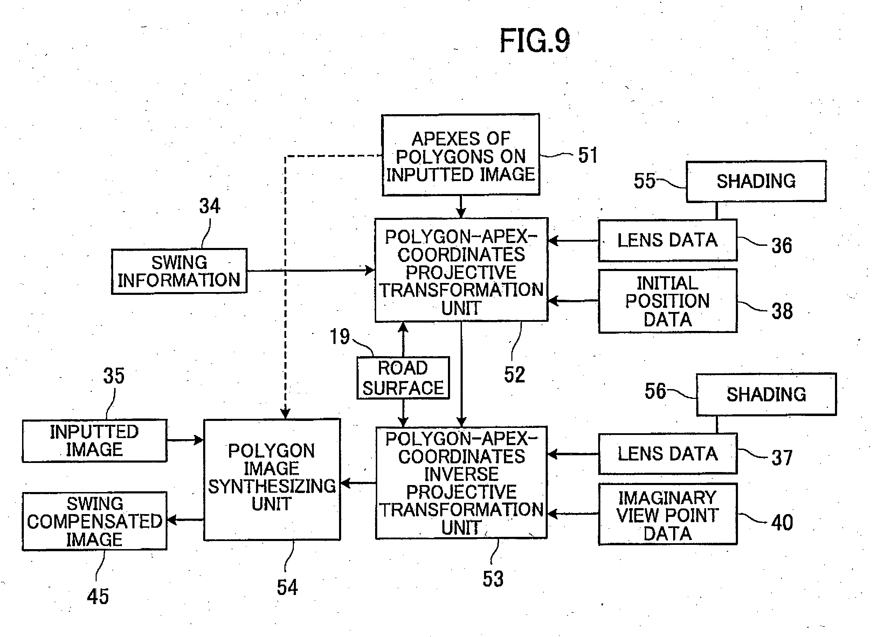

FIG. **9** is s a block diagram of the second embodiment of the operation support device according to the present invention which is different in construction from the second embodiment of the operation support device shown in **FIG. 7;**

[FIG. 10]

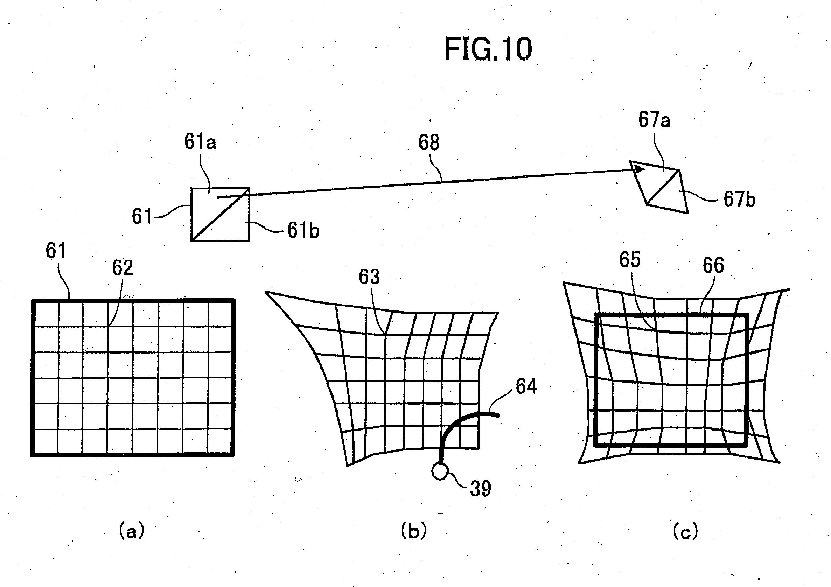

FIGS. **10(a), 10(b)** and **10(c)** are explanation views for explaining an operation to compensate the swings with the second embodiment of the operation support device according to the present invention which is different in steps from the second embodiment of the operation support device shown in **FIG. 8;**

[FIG. 11]

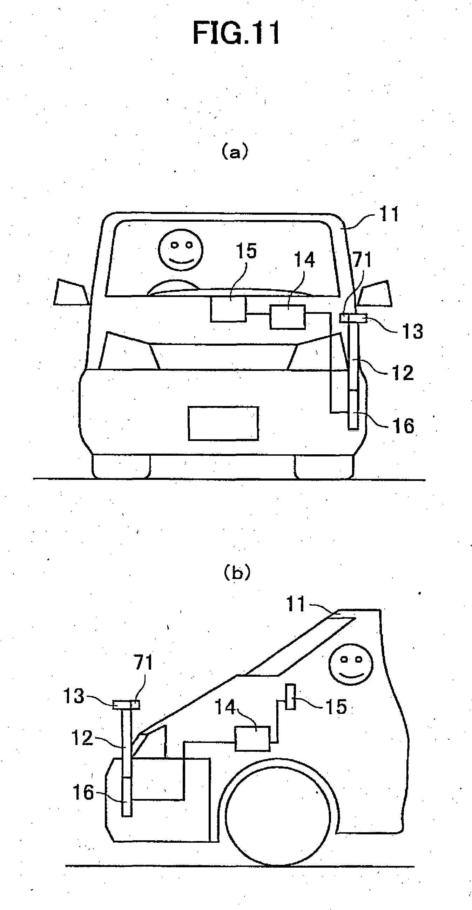

FIGS. **11** are schematic views of the third embodiment of an operation support device according to the present invention, (**a**) showing a schematic front view of an automotive vehicle having an operation support device, (**b**) showing a schematic side view of the automotive vehicle having the operation support device;

[FIG. 12]

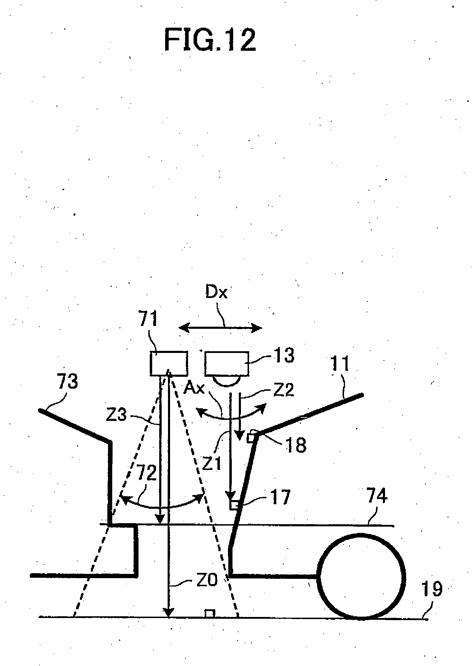

FIG. **12** is an explanation view for explaining an operation performed by a distance device and a swing compensation image processing unit forming part of the third embodiment of the operation support device according to the present invention;

[FIG. 13]

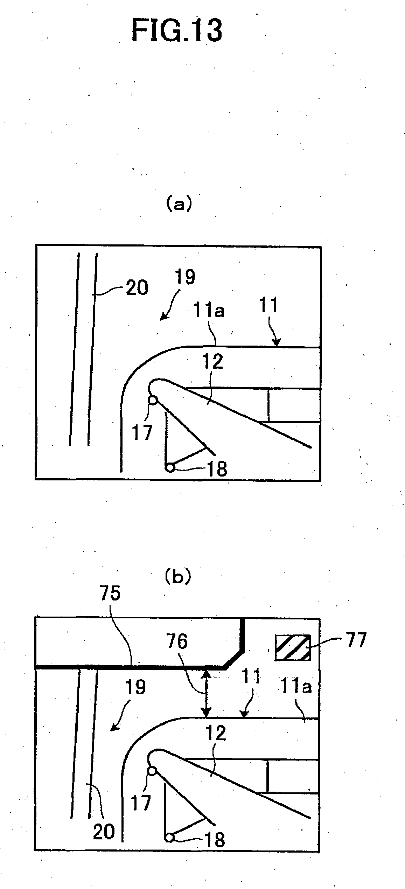

FIGS. **13** are schematic views showing an image outputted by the third embodiment of the assisting apparatus according to the present invention, (**a**) showing an outputted image with no obstacles, (**b**) showing an outputted image with obstacles detected;

[FIG. 14]

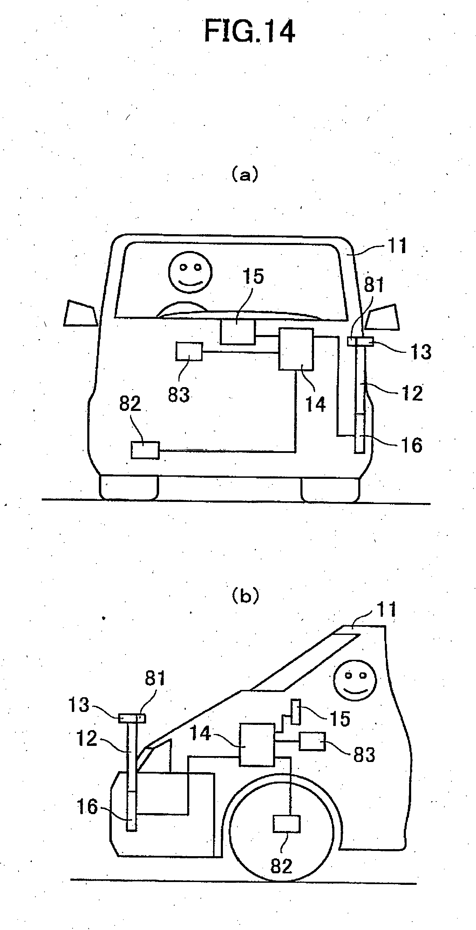

FIGS. **14** are schematic views of the fourth embodiment of an operation support device according to the present invention, (**a**) showing a schematic front view of an automotive vehicle having an operation support device, (**b**) showing a schematic side view of the automotive vehicle having the operation support device;

[FIG. 15]

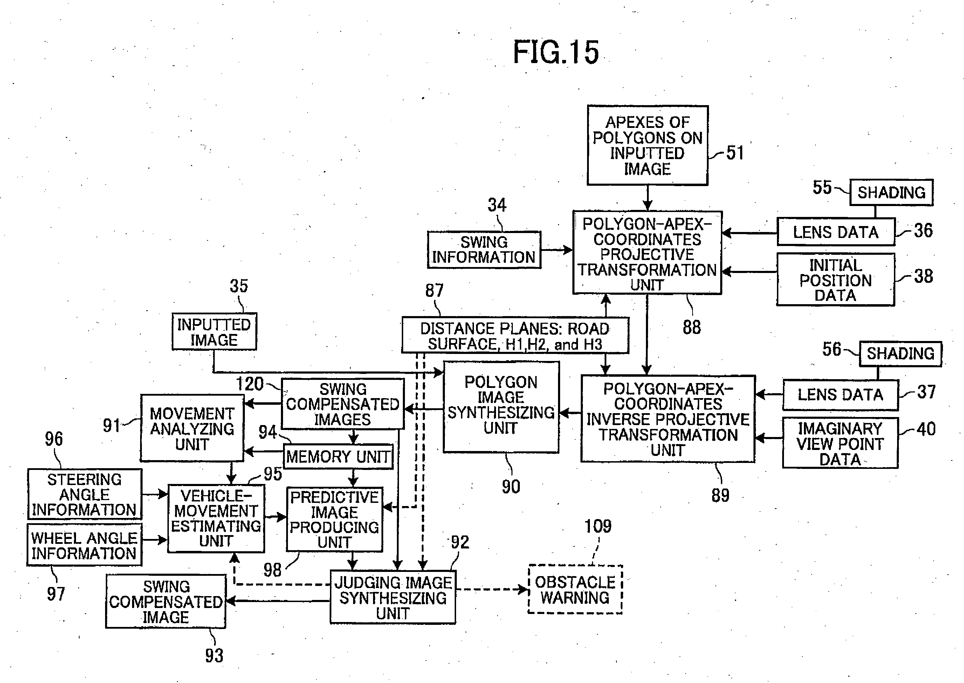

FIG. **15** is s a block diagram of the fourth embodiment of the operation support device according to the present invention;

[FIG. 16]

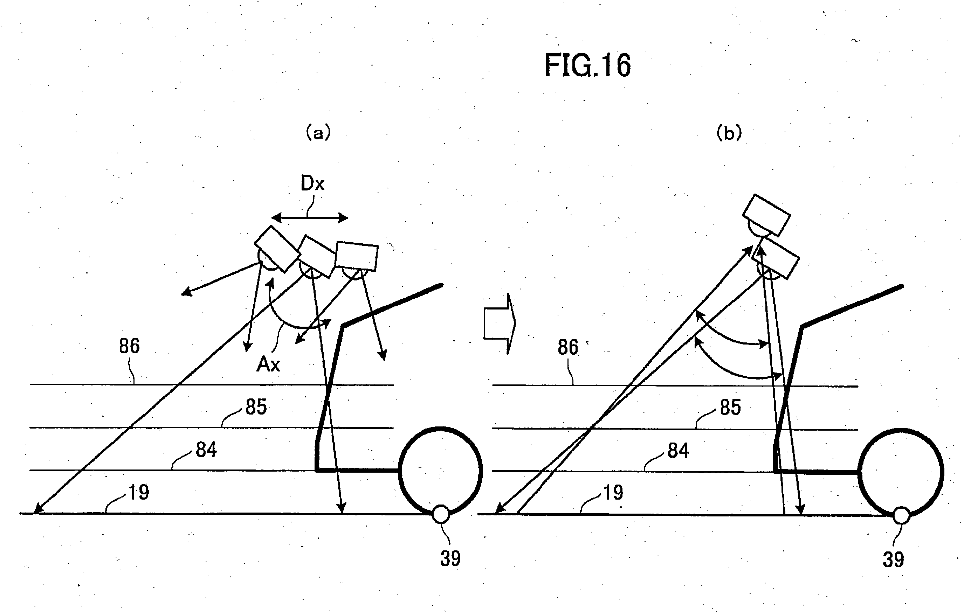

FIGS. **16**(**a**) and **16**(**b**) are explanation views for explaining an operation to compensate the swing with the fourth embodiment of the operation support device according to the present invention, (**a**) showing a camera for taking an image to be transformed into a projected and transformed image and a projected and transformed range, (**b**) showing an imaginary camera unit for taking an image to be transformed into an inversely projected and transformed image and an inversely projected and transformed range;

[FIG. 17]

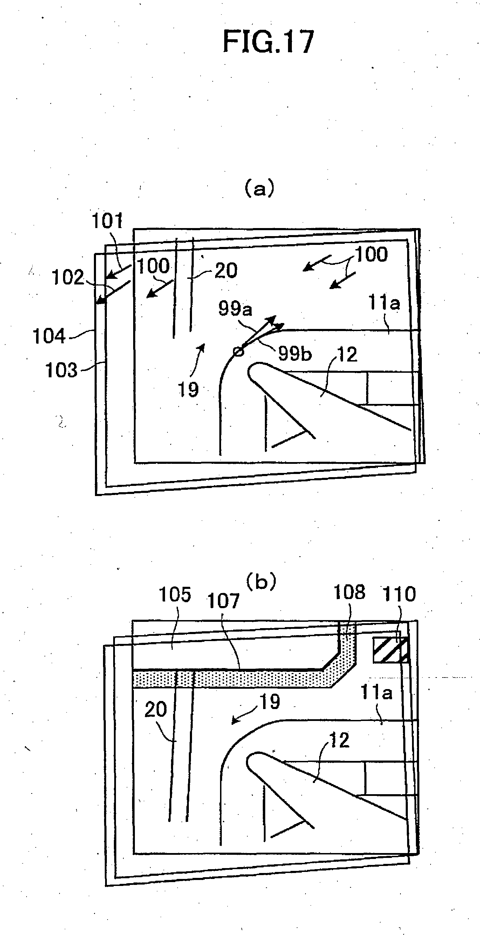

FIGS. **17** are schematic views showing an image outputted by the fourth embodiment of the assisting apparatus according to the present invention, (**a**) showing an outputted image with no obstacles, (**b**) showing an outputted image with obstacles detected;

[FIG. 18]

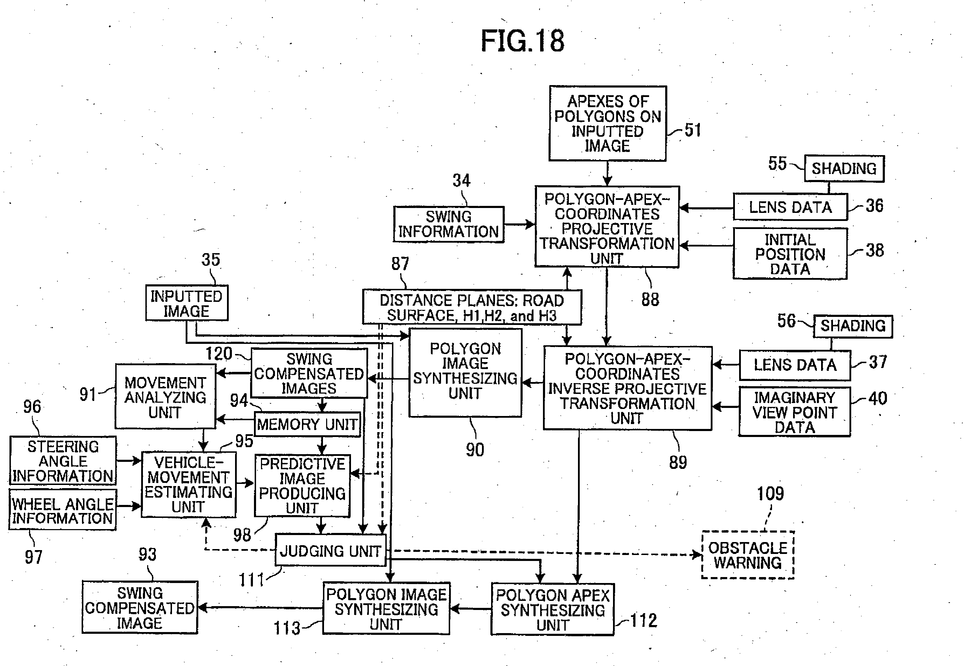

FIG **18** is s a block diagram of the fourth embodiment of the operation support device according to the present invention which is different in construction from the fourth embodiment of the operation support device shown in FIG. **15;**

[FIG 19]

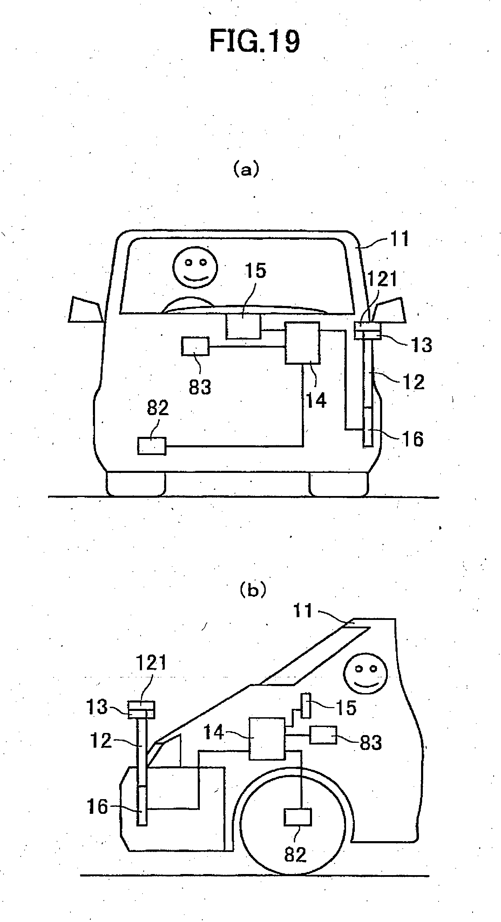

FIGS. **19** are schematic views of the fifth embodiment of an operation support device according to the present invention, **(a)** showing a schematic front view of an automotive vehicle having an operation support device, **(b)** showing a schematic side view of the automotive vehicle having the operation support device;

[FIG 20]

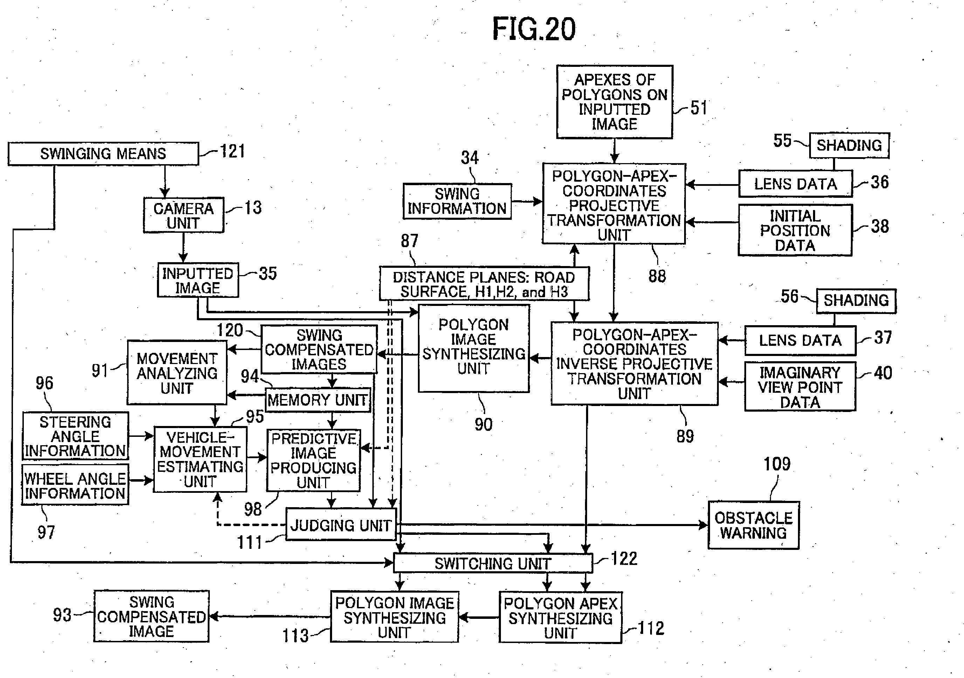

FIG. **20** is a block diagram of the fifth embodiment of the operation support device according to the present invention;

[FIG. 21]

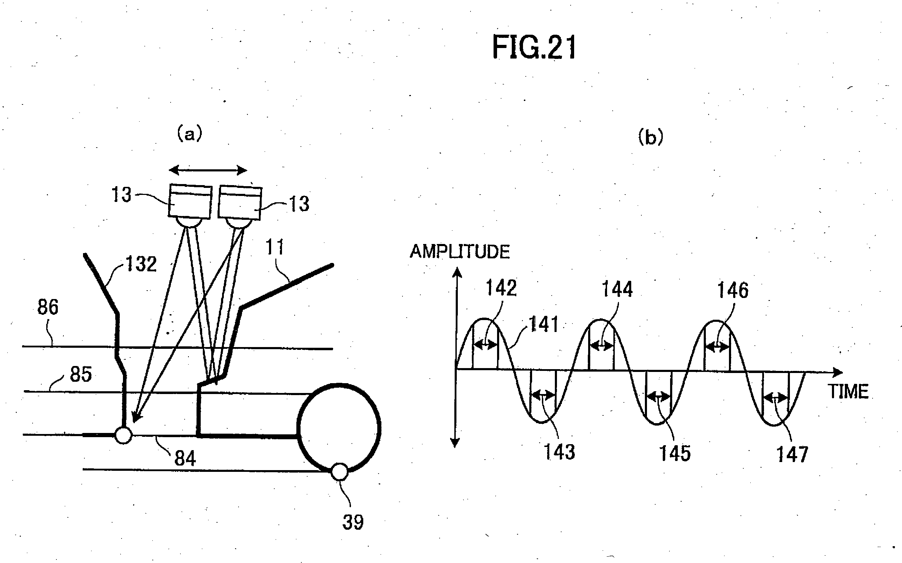

FIGS. **21** are explanation views for explaining an operation to compensate the swings with the fifth embodiment of the operation support device according to the present invention, (**a**) showing a positional relationship between a camera oscillated and obstacles, (b) showing a relationship between the oscillation and the time of the camera oscillated;

[FIG. 22]

FIG. **22** is an explanation view for explaining an operation to compensate the swing with a movie camera and the like; and

[FIG. 23]

FIG. **23** is an explanation view for explaining the view point swing of the camera swung by the rod portion forming part of the operation support device according to the present invention.

EXPLANATION OF THE REFERENCE NUMERALS

| | |
|---|---|
| **11:** | Automotive vehicle |
| **12:** | Rod portion (Rod-like retaining means) |
| **13:** | Camera unit (Image taking means) |
| **14:** | Swing compensation image processing unit (Swing compensation image processing unit, Distance detection means) |
| **15:** | Image displaying means (Displaying means) |
| **31, 81:** | Acceleration sensors (Detection means) |
| **42:** | Imaginary camera unit (Imaginary image taking means) |
| **71:** | Distance device (Distance means) |
| **121:** | Oscillation means |

DESCRIPTION OF THE PREFERRED EMBODIMENTS

The embodiments of the operation support device according to the present invention will hereinafter be described with the accompanying drawings.

(First Embodiment)

FIGS. **1** to **5** are schematic views showing the first embodiment of the operation support device according to the present invention.

The construction of the first embodiment of the operation support device according to the present invention will be firstly explained. As shown in FIGS. **1** and **2,** the operation support device comprises an extendible and contractible rod portion (defined in the present invention as rod-like retaining means) **12** projected from a bumper **11a** forming part of an automotive vehicle **11,** a camera unit **13** mounted on the top end of the rod portion **12** to serve as image taking means for taking images of one or more objects located around the automotive vehicle **11,** a swing compensation image processing unit (defined in the present invention as swing compensation image processing means) **14** having the image inputted therein to compensate the image on the basis of a swing on a special distance plane spaced apart from the camera unit **13,** the swing-compensated image being in parallel relationship with the image taken by the camera unit **13,** and a display unit (defined in the present invention as display means) **15** provided in the cabin of the automotive vehicle **11** to display the swing-compensated image on a screen.

In this embodiment, the swing compensation image processing unit **14** is adapted to detect a rotational swing and a positional swing of the camera unit **13** provided on the top end of the rod portion **12** by chasing two different particular points on the automotive vehicle **11,** and to compensate the image taken by the camera unit **13** by canceling the effect of the rotational and positional swings of the camera unit **13** on the special distance plane spaced apart from the camera unit **13.**

The bumper **11a** has a rod housing and retaining portion **16** for retaining the rod portion **12** to be longitudinally retracted and accommodated in the rod housing and retaining portion **16** together with the camera unit **13.**

More specifically, the rod portion **12** is provided in the left end portion of the bumper **11a** of the automotive vehicle **11** so that the rod portion **12** can be projected upwardly of the automotive vehicle **11** before the image is taken by the camera unit **13,** thereby making it possible to provide information about the image taken by the camera unit **13** to indicate the dead points and directions in the left side of the automotive vehicle **11** to ensure that the operation by the driver for his or her parking and passing through an narrow space is facilitated. Under the state that the image is not taken by the camera unit **13,** the rod portion **12** remains retracted and housed in the rod housing and retaining portion **16** with the camera unit **13** being accommodated in the bumper **11a** as will be seen particularly in FIG 2.

FIGS. **3** and **4** show a swing compensating operation to be carried out by the swing compensation image processing unit **14.** The forward portion of the automotive vehicle **11** below the rod portion **12** held under the retracted state of the rod portion **12** shown in FIG. **1** is provided with a pair of markers **17** and **18** upwardly and downwardly spaced apart from each other to take their images shown in FIG. 3 with the camera unit **13** under the state that the rod portion **12** is extended upwardly. Therefore, FIG. **3** shows an image taken by the camera unit **13** for the markers **17** and **18,** a road surface **19,** white lines **20** on the road surface **19,** the rod portion **12,** and the bumper **11a** of the automotive vehicle **11** driven by a driver

The swing compensation image processing unit **14** is adapted to detect the rotational and positional swings of the camera unit **13** by chasing the markers **17** and **18** through the image taken by the camera unit **13,** and to compensate the image taken by the camera unit **13** after estimating the swing on the road surface **19** shown in FIG **1** on the basis of the detecting results.

This means that the swing-compensated image can be displayed without being affected by the swing on the road surface **19** or the white lines **20** shown in FIG. **3,** thereby making it possible for the driver to easily recognize the image at a relatively high level while driving his or her car.

The detailed description about the swing compensating operation will be made with reference to FIGS. **4.**

FIGS. **4** are schematic views showing a method of estimating the swing on the road surface **19** by chasing the markers **17** and **18** indicative of two different particular points. The markers **17** and **18** are illustrated in FIG. **4** as being provided on the automotive vehicle **11** in upwardly downwardly spaced-apart relationship with each other with the legends **"Z1", "Z2",** and **"Z0"** indicating the distances between the camera unit **13** and the marker **17,** between the camera unit **13** and the marker **18,** and between the camera unit **13** and the road surface **19,** respectively.

The camera unit **13** is positioned with its lens directed downwardly, and is assumed to be swung with the swing including a horizontal positional swing **"Dx"** and a horizontal rotational swing **"Ax"** while the swing of the image being assumed to be correspondent to a linear addition of these swings **"Dx"** and **"Ax".**

The swings of the images **(Dx0, Dx1, Dx2)** correspondent to the horizontal positional swings **"Dx"** are represented by $Dx0 = Dx \cdot f/Z0, Dx1 = Dx \cdot f/Z1, Dx2 = Dx \cdot f/Z2$ correspondent to the distance **"Z"** from the camera unit **13,** for example, the distance **"Z0"** between the camera unit **13** and the road surface **19,** the distance **"Z1"** between the camera unit **13** and the marker **17,** and the distance **"Z2"** between the camera unit **13** and the marker **18** (where **"f"** is a focus distance). The swing of the image correspondent to the rotational swing "**Ax**" are represented by $Ax0 = Ax1 = Ax2$, irrespective of the distance from the camera unit 13.

The swings (xl, x2) actually observed at the two different particular points of the automotive vehicle **11** are respectively represented by the linear addition $x1 = Dx1 + Ax1$, $x2 = Dx2 + Ax2$. This means that the swing on the road surface **19,** $X0 = Dx0 + Ax0$ is assumed to be $X0 = (X2 - X1) \cdot Z2 \cdot Z1/(Z0(Z1 - Z2)) + (Z1 \cdot X1 - Z2 \cdot X2)/(Z1 - Z2)$.

The swing compensation image processing unit **14** can produce an output image compensated with the input image being moved in parallel relationship with the actual image at a compensation amount correspondent to the assumed swing **"X0"** on the road surface **19.** In reality, the image to be processed is two-dimensional **(X, Y)** information so that if the image is compensated with the swing in the **"X"** direction indicative of a lateral direction, the image can readily be compensated with the swing in the **"Y"** direction indicative of a longitudinal direction in the same manner as that of the image compensated in the **"X"** direction. It is therefore to be noted from the foregoing description that the swing compensation image processing unit **14** can compensate the swings in the **"X"** and **"Y"** directions.

The method mentioned in the above is effective for the image closed to the light axis of the camera unit **13,** but can effectively enhance a visibility to a relatively high level for the images remote from the light axis of the camera unit **13** with the swings compensated as small as possible, for example, the input swing being compensated in the range from its one half to its one fourth possibly reduced since the remote images are each apt to have an error in the compensation amount increased in response to the distance between the image to be taken by the camera unit **13** and the light axis of the camera unit **13.**

The first embodiment of the operation support device thus constructed comprises a rod portion **12** projected from the automotive vehicle **11,** a camera unit **13** mounted on the top end of the rod portion **12** to serve as an image taking means for taking an image of an object around the automotive vehicle **11,** a swing compensation image processing unit **14** inputted therein with the image taken by the camera unit **13** to output a signal indicative of the image compensated by a compensation amount "**X0**" corresponding to a swing from its home position on the road surface **19** (special plane) from the camera unit **13,** the swing being caused by the movement of the camera unit **13** with the compensated image being moved in parallel relationship with the image taken by the camera unit **13.** This results in the fact that the swing of the image of the object to be taken on the road surface **19** can be reduced to a level as small as possible, thereby producing an image excellent in quality even if the rod portion **12** is swung with the camera unit **13** concomitantly being swung by the rotational swing **"Ax"** and the positional swing **"Dx"**.

Especially, the swing compensation image processing unit **14** exemplified in the embodiment of the operation support device according to the present invention is adapted to chase two different particular points such as for example the markers **17** and **18** provided on the automotive vehicle **11** to detect the rotational swing **"Ax"** and the positional swing **"Dx"** of the camera unit **13** provided on the top end of the rod portion **12**, thereby making possible for the swing of the image from the camera unit **13** to the road surface **19** to effectively be cancelled and compensated and thus producing an image excellent in quality even if the rod portion **12** is swung with the camera unit **13** concomitantly being swung by the rotational swing "**Ax**" and the positional swing **"Dx"**.

In addition, the swing compensation image processing unit **14** exemplified in the embodiment of the operation support device according to the present invention comprises a display unit **15** for displaying an image compensated in response to the swing of the camera unit **13** to ensure that the surrounding objects and situations around the automotive vehicle **11** is readily recognized by the driver, thereby providing an enhanced drive safety to the driver.

The swing compensation image processing unit **14** exemplified in the embodiment of the operation support device according to the present invention is adapted to output a signal indicative of the image compensated by a compensation amount **"X0"** corresponding to a swing from its home position on the road surface **19** (special plane) from the camera unit **13**, the swing being caused by the movement of the camera unit **13** and the image to be compensated being moved in parallel relationship with the image taken by the camera unit **13**, so that the swing compensation image processing unit **14** is not available for the rotational swing **"Ax"** of the camera unit 13 around the center axis of the camera unit **13**. In this case, the camera unit **13** is required not to be swung by the rotational swing **"Ax"** around the center axis of the camera unit **13** as will be seen from FIG. **5**.

In order to have the camera unit **13** not swung around the center axis of the camera unit **13**, a counter weight **21** is required to be mounted on the top end of the rod portion **12** in opposing relationship with the camera unit **13** across the center axis of the rod portion **12**.

The above-mentioned swing compensating method is of compensating the positional swings with the images being moved in parallel relationship with each other independently in the **"X"** and **"Y"** directions. As will be understood from the foregoing description, the camera unit **13** is swung around the center axis of the rod portion 12 by the rotational swing **"R"** other than the positional swing. For the rotational swing **"R",** the above-mentioned swing compensating method cannot compensate the rotational swing **"R"** only with the images being moved in parallel relationship with each other independently in the **"X"** and **"Y"** directions as the images are swung by rotational swing **"R"** at the center of the display unit **15**.

In the case that the camera unit **13** is mounted on the top end of the rod portion **12** with the gravity position **22** of the camera unit **13** being spaced apart from the center axis **12a** of the rod portion **12** in FIG. **5,** the acceleration and deceleration of the automotive vehicle **11** generated in the direction **23** cause a rotation moment **25** between the gravity position **22** of the camera unit **13** and the center axis 12a of the rod portion **12,** thereby resulting in causing the rotational swing **"R".**

For the purpose of lessening the rotational swing **"R"** to a minimum level, the counter weight **21** is mounted on the top end of the rod portion **12** with the gravity position of the counter weight **21** being in symmetrical relationship with the gravity position of the camera unit **13** to have the gravity position formed by the addition of the gravity position of the counter weight **21** and the gravity position of the camera unit **13** positioned in registry with and on the center axis **12a** of the rod portion **12**. The counter weight **21** and the camera unit **13** thus provided make it possible to cancel the rotation moments of the camera unit **13** and the counter weight **21** caused by the acceleration and the deceleration of the automotive vehicle **11** generated in the direction **23** so that the rotational swing **"R"** of the camera unit **13** around the light axis of the camera unit **13** can be lessened to almost zero level and can produce an image compensated to a desirable and high level in compensation quality.

(Second Embodiment)

FIGS. 6 to **10** show the second embodiment of the operation support device according to the present invention. There will be no description about the detailed construction of the second embodiment of the operation support device according to the present invention except for the elements or parts of the second embodiment different from those of the first embodiment but bearing the same reference numerals as those of the elements or parts of the first embodiment.

The second embodiment of the operation support device according to the present invention is shown in FIG. **6** as comprising an acceleration sensor (defined in the present invention as being a detection means) **31** on the top end of the rod portion **12** to occupy a position the same as that of the camera unit **13** to detect positional and rotational swings of the camera unit **13,** and to output swing information about the positional and rotational swings of the camera unit **13** to the swing compensation image processing unit **14**.

As shown in FIG. **7**, the swing compensation image processing unit **14** in this embodiment comprises a projective transformation unit **32** and an inverse projective transformation unit **33**. The projective transformation unit **32** is adapted to perform the projective transformation of the image taken by the camera unit **13** to produce an image projected on a special distance plane, such as for example a road surface **19**, spaced apart from the camera unit **13**. The inverse projective transformation unit **33** is adapted to perform the inverse projective transformation of the projected image, and to produce in image to be displayed as an image to be taken by the imaginary camera unit without the effect of the rotational and positional swings of the camera unit **13**.

The detailed description about the swing compensating operation will be made with reference to FIGS. 7 and **8**.

FIG. **7** is a block diagram showing a swing compensation image processing unit 14, while FIG. **8** is a schematic view for explaining how the swing compensation is carried out by the swing compensation image processing unit **14**. The camera unit **13** is shown in FIG **8** as being disposed with its light axis being inclined somewhat leftwardly and forwardly from the downward direction of the camera unit **13**.

The driving operation by the driver causes the camera unit **13** to be swung by the positional swing "**Dx**'' and the rotational swing "**Ax**", while the positional swing "**Dx**" and the rotational swing **"Ax"** of the camera unit **13** is detected by the acceleration sensor 31. The swing information about the positional swing **"Dx"** and the rotational swing "**Ax**" of the camera unit **13** is then outputted to the swing compensation image processing unit 14.

The swing compensation image processing unit **14** is then operated to compensate the image **35** taken by the camera unit **13** by reducing the effect of the rotational and positional swings of the camera unit **13** in compliance with an algorism shown in FIG 7 on the basis of the swing information **34** about the positional swing **"Dx"** and the rotational swing "**Ax**" of the camera unit **13** received from the acceleration sensor **31**. The compensated images are then outputted by the swing compensation image processing unit **14**.

The camera unit **13** exemplified in the present embodiment of the operation support device according to the present invention has a wide-angle lens with a horizontal angle in the range of 110 to 140 degrees. In general, it is unavoidable for the wide-angle lens to have an inherent lens deformation. Therefore, the swing compensation image processing unit **14** has lens data **36** about a field angle, a lens deformation, and the like inherent to the wide-angle lens.

The operation of the operation support device according to the second embodiment of the present invention is performed through the steps of calculating, by using the swing information **34** about the positional swing **"Dx"** and the rotational swing **"Ax"** of the camera unit **13** received from the acceleration sensor **31**, positions and directions of the camera unit **13** at the time of having the camera unit **13** take images **35**, compensating the image with the data about the lens deformation of the wide-angle lens, compensating the image with the position and the direction of the camera unit **13**, and having the projective transformation unit **32** produce an image to be projected on the road surface **19** spaced apart from the camera unit **13**.

As will be seen from FIG **8**, the camera unit **13** occupies the initial position **13a** under the condition that the rod portion **12** is not being swung with the camera unit **13**. On the other hand, the camera unit **13** occupies a position **13b** or a position **13c** changed with the positional swing **"Dx"** and the rotational swing **"Ax"**. Therefore, the projective transformation of the image taken by the camera unit **13** is performed by the projective transformation unit **32** on the basis of the position to be occupied by the camera unit **13** at the time of having the camera unit **13** take that image.

The transformed image is produced from the projected image by the inverse projective transformation unit **33** as an image taken by the imaginary camera unit **42** defined as imaginary image taking means with lens data **37** and located at a position and in a direction represented by imaginary view point data **40**.

As shown in FIG. **8**, the inverse projective transformation unit **33** is operated to synthesize a swing-compensated image, as an image taken by the imaginary camera unit **42** located at an imaginary view point **41** with lens data **37**, from the image projected on the road surface **19** and indicated by a legend **"M"**.

From the above-mentioned operations, it will be understood that the operation support device according to the second embodiment of the present invention can produce a swing-compensated image to be displayed at a relatively high quality with the reduced effect of the rotational and positional swings of the camera unit **13** on the special distance plane by reason that the image taken by the camera unit **13** can be compensated at the time of performing the projective transformation of the image to be taken by the camera unit **13**.

The operation support device according to the second embodiment of the present invention can produce a swing-compensated image to be displayed at a relatively high quality with the reduced effect of the swing of the camera unit **13** by reason that the image taken by the camera unit **13** is compensated on the basis of the lens data **36** even if the image has part deformed by the camera unit **13**.

The operation support device according to the second embodiment of the present invention can reduce the effect of the rotational and positional swings of the camera unit **13** on the special distance plane, i.e., the road surface **19**, even if the camera unit **13** is disposed with its light axis inclined somewhat leftwardly and forwardly from the downward direction of the camera unit **13**, by reason that the projective transformation unit **32** is adapted to produce an image projected to the road surface **19**, the inverse projective transformation unit **33** is adapted to produce an image viewed from the imaginary view point **41** from the image projected to the road surface **19**. This means that the operation support device according to the second embodiment of the present invention can allow the driver to notice an obstacle that is within a field wider than the field defined in the first embodiment

The direction and the position represented by the imaginary view point data **40** may be the same as the initial direction and the initial position to be occupied by the camera unit **13** with no swing, or may be different from the initial direction and the initial position to be occupied by the camera unit **13.**

The lens data **37** may be the same as the lens data **36** corresponding to the lens in the camera unit **13,** or may be different from the lens data **36** corresponding to the lens in the camera unit **13.**

In the operation support device according to the second embodiment of the present invention, the acceleration sensor **31** is adapted to detect the positional swing **"Dx"** and the rotational swing **"Ax"** of the camera unit **13.** However, the operation support device according to the second embodiment of the present invention may be adapted to detect the positional swing **"Dx"** and the rotational swing **"Ax"** of the camera unit **13** by chasing the markers **17** and **18** defined in the first embodiment as characteristic portions forming part of the automotive vehicle **11.**

In this embodiment, two projective transformations of the image are performed by the projective transformation units **32** and **33** on the basis of the construction shown in FIG. **7.** However, one projective transformation of the image may be performed on the basis of the construction shown in FIG. **9.**

The detailed description about the swing compensating method will be made with reference to FIGS. **9** and **10.** As shown in FIG. **10,** the inputted image is divided into eight-by-six rectangle portions, and sampled at apexes of the rectangle portions as those of polygons.

In this embodiment, each of the polygons has the shape of triangle. As shown in FIG. **10(a),** the rectangle portion **61** is divided into two triangle sections **61a** and **61b.** This means that the inputted image shown in FIG. **10(a)** is sampled at apexes of nine-by-seven polygons.

As shown in FIG. **9,** the coordinates of the apexes of the polygons projected on the road surface **19** are calculated by the polygon-apex-coordinates projective transformation unit **52** from the swing information **34,** the lens data **36,** initial position data **38,** polygon apex data **51** about the coordinates of the apexes of the polygons on the inputted image.

FIG. **10(b)** is a schematic view showing the positions of the apexes of the polygons projected on the road surface **19.** As an example, the apex **62** of one of the polygons shown in FIG. **10(a)** is transformed into the apex **63** of one of the polygons on the road surface **19** in FIG. **10(b).** As shown in FIG. **10(b),** the position **64** of the bumper **11a** projected on the road surface **19** leads to the reference point **39** on the road surface **19.**

In FIG **9,** the polygon-apex-coordinates inverse projective transformation unit **53** is operated to perform, on the basis of the lens data **37** and the imaginary view point data **40,** the inverse projective transformation of polygon-apex data indicative of the coordinates of the apexes of the polygons on the road surface **19** shown in FIG. **10(b)** into the coordinates of the apexes of the polygons on an image shown in FIG. **10(c)** and taken by the imaginary camera unit **42** shown in FIG. **8.**

In this step, the coordinates of the apexes of the polygons on the road surface **19** are transformed into the coordinates of the apexes of the polygons on an image shown in FIG. **10(c)** and taken by the imaginary camera unit **42** by using the swing information **34,** the lens information **36,** and the initial position data **38** indicative of the initial position of the camera unit **13.** Here, the coordinates of the apexes of the polygons located not only inside but also outside of the frame **66** of the image shown in FIG. **10(c)** and taken by the imaginary camera unit **42** are calculated by the polygon-apex-coordinates inverse projective transformation unit **53.** As shown in FIG **9,** the polygon image synthesizing unit **54** is operated to produce a swing-compensated image **45** by transforming the inputted image with polygon-apex data indicative of the coordinates of the apexes of the polygons on an image shown in FIG. **10(c)** and taken by the imaginary camera unit **42** and the coordinates of the apexes of the polygons on the inputted image.

The triangle polygons **61a** and **61b** of the rectangular portion **61** on the inputted image are transformed into triangle polygons **67a** and **67b** shown in FIG. **10(c)** through the projective transformation. Therefore, the picture elements in those triangle polygons **61a** and **61b** are linearly projected on respective elements in those triangle polygons **67a** and **67b** on the basis of affine transformation **66.**

The operation support device according to the second embodiment of the present invention can produce a swing-compensated image having a natural shading characteristic by reason that the lens data **36** includes shading data **55** indicative of its shading characteristic. The operation support device according to the second embodiment of the present invention can produce an image having shading characteristic by attaching gain data to the polygon- apex data, and multiplying the coordinates of the apexes of the polygons by respective gains represented by the attached gain data.

The operation support device according to the second embodiment of the present invention can produce a synthetic image having a natural shading characteristic from the swing-compensated image by reason that the lens data **37** of the imaginary camera unit **42** has shading data **56** for its imaginary lens.

(Third Embodiment)

FIGS. **11** to **13** show the third embodiment of the operation support device according to the present invention. There will be no description about the detailed construction of the third embodiment of the operation support device according to the present invention except for the elements or parts of the third embodiment different from those of the first or second embodiment but bearing the same reference numbers as those of the elements or parts of the first or second embodiment.

The third embodiment of the operation support device according to the present invention is shown in FIG **11** as comprising a distance device (defined in the present invention as being distance means) **71** on the top end of the rod portion **12** to occupy a position the same as that of the camera unit **13**. The distance device **71** is adapted to estimate a distance to an object in a field angle **72** of the camera unit **13**, and to produce distance data to be outputted to the swing compensation image processing unit **14**, this distance data being indicative of the estimated distance to the object.

The swing compensation image processing unit **14** is adapted to change the special distance plane on the basis of the distance data received from the distance device **71**, while the display unit **15** is adapted to display a swing-compensated image outputted by the swing compensation image processing unit **14** with obstacle warning about a bumper, a road surface **19** or the like detected by the distance device **71**.

The detailed description about the swing compensating operation will be made with reference to FIGS. **12** and **13**.

When there is no object within the field angle **72** of the camera unit **13**, the distance data indicative of the distance **"Z0"** to the road surface **19**, i.e., the nearest object other than the automotive vehicle **11** is outputted by the distance device **71**. Additionally, the image is partially masked as being indicative of the automotive vehicle **11** in a preliminary step.

In a manner similar to the manner mentioned in the first embodiment, the swing **"X0"** on the road surface **19** is then estimated by a following equation by the swing compensation image processing unit **14** from the swings **"X1"** and **"X2"** of the markers **17** and **18** indicative of two different particular points. The swing compensation image processing unit **14** is then operated to compensate the image by shifting the image in a direction against the estimated swing **"X0"**, the swing-compensated image being in parallel relationship with the image taken by the camera unit 13.

$$X0 = (X2 - X1) \cdot Z2 \cdot Z1/(Z0(Z1 - Z2)) + (Z1 \cdot X1 - Z2 \cdot X2)/(Z1 - Z2)$$

When, on the other hand, there is an automotive vehicle **73** within the field angle **72** of the camera unit **13** as shown in FIG **12**, the distance data indicative of the distance **"Z3"** to the bumper of the automotive vehicle **73**, i.e., the nearest object other than the automotive vehicle **11** is outputted by the distance device **71**. Additionally, the image is partially masked as being indicative of the automotive vehicle 11 in a preliminary step.

In a manner similar to the manner mentioned in the first embodiment, the swing **"X3"** on a plane **74** distant from the camera unit **13** is then estimated by a following equation by the swing compensation image processing unit **14** from the swings **"X1"** and **"X2"** of the markers **17** and **18** indicative of two different particular points. The image is then compensated by the swing compensation image processing unit **14** on the basis of a method of shifting the image in a direction against the swing **"X3".**

$$X3 = (X2-X1) \cdot Z2 \cdot Z1/(Z3(Z1-Z2)) + (Z1 \cdot X1-Z2 \cdot X2)/(Z1-Z2)$$

From the foregoing description, it will be understood that the operation support device according to the third embodiment of the present invention can produce an image to be displayed at a relatively high quality with the reduced swing on the road surface **19**, even if there is no obstacle in the field angle **72** of the camera unit **13**, by comprising a distance device **71** on the top end of the rod portion **12** to occupy a position the same as that of the camera unit **13**, the distance device **71** being adapted to estimate a distance to an object in a field angle **72** of the camera unit **13**, and to produce distance data to be outputted to the swing compensation image processing unit **14**, this distance data being indicative of the estimated distance to the object, the swing compensation image processing unit **14** being adapted to change the special distance plane on the basis of the distance data received from the distance device **71**.

When, on the other hand, there is an automotive vehicle **73** within the field angle **72** of the camera unit **13**, the operation support device according to the third embodiment of the present invention can produce an image to be displayed at a relatively high quality with the reduced swing on a special distance plane defined with the detected obstacle.

On the other hand, FIG. **13** is a schematic view showing images to be displayed by the display unit **15**. FIG.

**13(a)** is a schematic view showing an image to be clearly displayed with the reduced effect of the swing of the camera unit **13.** This image is indicative of the road surface **19,** the white lines **20,** and parts of the automotive vehicle **11.**

FIG **13(b)** is a schematic view showing an image taken when the obstacle **75** such as a bumper of an automotive vehicle **73** enters into the field angle **72** of the camera unit **13.** The operation support device according to the third embodiment of the present invention can allow the driver to recognize the distance **76** between the automotive vehicle **11** and the obstacle **75** with no difficulty, and allow the driver to drive the automotive vehicle **11** with a relatively high safety by reason that the image is clearly displayed by the display unit **15** without being deteriorated by the swing of the camera unit **13,** the obstacle **75** represented by the image being clear in comparison with the road surface **19,** the white lines **20,** and part of the automotive vehicle **11.** The operation support device according to the third embodiment of the present invention can allow the driver to recognize the distance **76** between the automotive vehicle **11** and the obstacle **75** with no difficulty, and allow the driver to drive the automotive vehicle **11** with a relatively high safety. Additionally, the operation support device according to the third embodiment of the present invention can inform the driver about whether or not there is an obstacle such as for example a bumper forming part of the automotive vehicle **73** within the field angle **72** of the camera unit **13,** and allow the driver to notice an obstacle which is within the field angle **72** of the camera unit **13,** by blinking part **77** of the image as an obstacle warning signal.

In general, the driver cannot watch at frequent intervals the image displayed on the screen of the display unit **15** under the condition that the driver is operating the automotive vehicle **11.** However, the operation support device according to the third embodiment of the present invention can securely inform the driver about whether or not there is an obstacle such as for example a bumper forming part of the automotive vehicle **73** within the field angle **72** of the camera unit **13,** and allow the driver to notice an obstacle which in within the field angle **72** of the camera unit **13,** by blinking part **77** of the image as an obstacle warning signal.

(Fourth Embodiment)

FIGS. **14** to **18** are schematic views showing the fourth embodiment of the operation support device according to the present invention. There will be no description about the detailed construction of the fourth embodiment of the operation support device according to the present invention except for the elements or parts forming part of the fourth embodiment different from those of the first or second embodiment but bearing the same reference numbers as those of the first or second embodiment.

The operation support device according to the fourth embodiment of the present invention is shown in FIG. **14** comprises an acceleration sensor (defined in the present invention as a detecting means) **81** on the top end of the rod portion **12** to occupy a position the same as the position of the camera unit **13** to detect the positional and rotational swings of the camera unit **13,** a steering angle sensor **82** for detecting a steering angle, and a wheel speed sensor **83** for detecting a wheel speed.

As shown in FIG. **15,** the swing compensation image processing unit **14** includes a polygon-apex-coordinates projective transformation unit **88,** a polygon-apex-coordinates inverse projective transformation unit **89,** a polygon image synthesizing unit **90,** a movement analyzing unit **91,** a judging image synthesizing unit **92,** a vehicle-movement estimating unit **95,** and a predictive image producing unit **98.**

In this embodiment, planes **84, 85,** and **86** spaced apart from the road surface **19,** and shown in FIG. **16** are defined as special distance planes **87** shown in FIG. **15.** The polygon-apex-coordinates projective transformation and inverse projective transformation units **88** and **89** are adapted to perform the transformation of the coordinates of the apexes of the polygons, while the polygon image synthesizing unit **90** is adapted to produce swing-compensated images **120** which can be compensated on the planes **84, 85,** and **86.**

The polygon image synthesizing unit **90** is adapted to output the swing-compensated images **120** to a memory unit **94,** the movement analyzing unit **91,** and the judging image synthesizing unit **92.** The movement analyzing unit **91** is adapted to analyze the movement of the automotive vehicle **11** by comparing the current swing-compensated images with the previous swing-compensated images stored in the memory unit **94,** and to output analysis information about the estimation information on the movement of the automotive vehicle **11** to the vehicle-movement estimating unit **95.**

The vehicle-movement estimating unit **95** is adapted to estimate the movement of the automotive vehicle **11** on the basis of steering angle information **96** produced by the steering angle sensor **82** and wheel speed information **97** produced by the wheel speed sensor **83,** and to calibrate estimation information on the basis of the analysis information received from the movement analyzing unit **91,** and to output the calibrated estimation information to the predictive image producing unit **98.**

The predictive image producing unit **98** is adapted to produce predictive images corresponding to the respective special distance planes **87** on the basis of the calibrated estimation information received from the vehicle-movement estimating unit **95.** The judging image synthesizing unit **92** is adapted to compare the swing-compensated images **120** with the predictive images corresponding to the special distance planes **87,** and to produce an image from the swing-compensated image **93** the same as, or closely similar to any one of the predictive images corresponding to the special distance planes **87.**

FIGS. **17 are** schematic views for explaining the above-mentioned functions, (**a**) showing the image compensated on the road surface **19.** When the automotive vehicle travels in the direction of an arrow **99a** or an arrow **99b,** the road surface **19** moves with respect to the automotive vehicle **11** in the direction of an arrow **100** opposite to the arrow **99a** or the arrow **99b.**

The above-mentioned movement can be detected by the movement analyzing unit **91** through the steps of comparing the current swing compensation image with the prior swing compensation image. On the other hand, the movement of the automotive vehicle **11 is** estimated on the basis of steering angle information **96** produced by the steering angle sensor **82** and wheel speed information **97** produced by the wheel speed sensor **83.**

In FIG. **17(a),** the movement of the automotive vehicle **11** estimated on the basis of the steering angle information **96** and the wheel speed information **97** is indicated by an arrow **99a.** However, this estimation results on the movement **99b** of the automotive vehicle **11** has an error resulting from a skid or the like. The vehicle-movement estimating unit **95** is required to reduce the error of the estimated movement of the automotive vehicle **11** by calibrating the estimated movement of the automotive vehicle **11** on the basis of the analysis results **100** received from the movement analyzing unit **91,** and to output the calibrated estimation results on the movement **99b** of the automotive vehicle **11** to the predictive image producing unit **98.**

In the predictive image producing unit **98,** the predictive images corresponding to the special distance planes **87** are produced on the basis of the calibrated estimation results on the movement **99b** of the automotive vehicle **11.** When the image corresponding to the road surface **19** is moved in the direction of an arrow **101** in FIG. **17(a)** under the condition that the automotive vehicle **11** travels in the direction of the arrow **99b** opposite to the arrow **101,** the image corresponding to the plane spaced apart from the road surface **19** with a height **"H1"** being moved in the direction of an arrow **102.** In other words, the effect of the swing of the camera unit **13** on that plane depends on the distance between the camera unit **13** and that plane. Accordingly, the prior swing-compensated images are moved in the directions of the reference numbers **103** and **104** in order to obtain images predicted to the current swing-compensated images.

The judging image synthesizing unit **92** is operated to compare the swing-compensated images with the predictive images corresponding to the special distance planes **87,** and to produce one image from one swing-compensated image closely similar to the predictive image corresponding to one special distance plane. It is preferable to select the swing-compensated image corresponding to one special distance plane closest to the road surface **19** under the condition that there is no edge on the swing-compensated image closely similar to the predictive image.

As will be seen from FIG **17(b),** the swing-compensated image corresponding to the road surface **19** is selected by the judging image synthesizing unit **92** by reason that the predictive image is closely similar to the swing-compensated image corresponding to the road surface **19.**

When, on the other hand, the obstacle **105** such as the bumper of the automotive vehicle is in the field angle of the camera unit **13,** the swing-compensated image corresponding to the special distance plane spaced from the road surface **19** is selected by the judging image synthesizing unit **92** by reason that the predictive image is closely similar to, or substantially the same as the swing-compensated image corresponding to the special distance plane **H1** spaced from the road surface **19.**

The swing-compensated image **93** is synthesized from portions of the selected swing-compensated images, and outputted by the judging image synthesizing unit **92.** This swing-compensated image **93** has a buffer portion **108** defined between the portion of the swing-compensated image corresponding to the road surface **19** and the portion of the swing-compensated image corresponding to the special distance plane spaced from the road surface **19** by reason that the boundary between of the portion of the swing-compensated image corresponding to the road surface **19** and the portion of the swing-compensated image corresponding to the special distance plane spaced from the road surface **19** is emphasized in swing-compensated image **93.** This buffer portion **108** of the swing-compensated image **93** is synthesized from the weighted portions of the selected swing-compensated images.

The judging image synthesizing unit **92** is adapted to receive, as a feedback, the analytical result from the vehicle-movement judging unit **95** to estimate the movement of the automotive vehicle **11** on the basis of the feedback by reason that the vehicle-movement judging unit **95** is adapted to perform the analysis of the movement of the automotive vehicle **11** to detect which part of the image is closely similar to the image compensated on the special distance plane **87.**

The judging image synthesizing unit **92** may be adapted to judge whether or not there is an obstacle in the vicinity of the, automotive vehicle **11** by detecting which part of the image is closely similar to the image compensated on the special distance plane **87.** Additionally, the obstacle warning unit **109** may be adapted to inform about an obstacle located around the automotive vehicle **11** on the basis of the judgment made by the judging image synthesizing unit **92,** and to blink part of the image as an obstacle warning sign **110** as shown in FIG **17(b),** or to superimpose obstacle information on the buffer portion **108** shown in FIG. **17(b).**

In this embodiment, the judging image synthesizing unit **92** is adapted to judge whether or not each of the swing-compensated images **120** is closely similar to each of the predictive images corresponding to the special distance planes. However, the operation support device may comprise constitutional elements shown in FIG **18.**

From the foregoing description, it will be understood that the operation support device according to the fourth embodiment of the present invention can produce a swing-compensated image to be displayed at a relatively high quality, without being affected by the positional swing and rotational swing of the camera unit **13,** by judging whether or not the predictive image produced from the prior images on the basis of the movement of the automotive vehicle **11** is closely similar to the images compensated on the special distance planes **87** on the basis of the positional and rotational swings of the camera unit **13.**

As shown in FIG. **18,** the operation support device according to the fourth embodiment of the present invention comprises, in place of the judging image synthesizing unit **92** shown in FIG. **15,** a judging unit **111,** a polygon apex synthesizing unit **112,** and a polygon image synthesizing unit **113.** The judging unit **111** is operated to judge whether or not each of the swing-compensated images **120** is closely similar to any one of the predictive images corresponding to the respective distance plane **87,** and to output the judging result to the polygon image synthesizing unit **112.**

The polygon apex synthesizing unit **112** is operated to produce and output, on the basis of the judging results received from the judging unit **111** and polygon-apex data compensated on the special distance plane **87** received from the polygon-apex-coordinates inverse projective transformation unit **89,** polygon-apex data compensated on a special distance plane on which the predictive image is closely similar to the swing-compensated image. The polygon image synthesizing unit **113** is then operated to output a swing-compensated image produced from the inputted image **35** on the basis of the polygon-apex data.

As will be seen from the foregoing description, the operation support device according to the fourth embodiment of the present invention can interpolate position data with polygon-apex data without emphasizing local structural discontinuity of synthetic image by reason that the image has a buffer portion **108** shown in FIG. **17(b).**

(Fifth Embodiment)

FIGS. **19** to **21** show the fifth embodiment of the operation support device according to the present invention. There will be no description about the detailed construction of the fifth embodiment of the operation support device according to the present invention except for the elements or parts of the fifth embodiment different from those of the first or fourth embodiment but bearing the same reference numbers as those of the first or fourth embodiment.

The operation support device according to the fourth embodiment can output the swing-compensated image **93** with additional obstacle information **110.** When the swing of the camera unit **13** is relatively small, the predictive image is almost the same as the image compensated on each of the special distance planes. In this case, the judging image synthesizing unit **92** tends to reduce its accuracy of detecting an obstacle by selecting the road surface **19** even if there is an obstacle in the field angle of the camera unit **13.**

On the other hand, the operation support device according to the fifth embodiment is characterized in that oscillation means **121** mounted, as shown in FIG. **19,** on the top end of the rod portion **12** to occupy a position the same as that of the camera unit **13.** The oscillation means **121** is adapted to swing the camera unit **13** with the rod portion **12,** and to output a timing signal.

More specifically, the operation support device according to the fifth embodiment comprises oscillation means **121** for swinging the rod portion **12,** and a swing compensation image processing unit **14** (defined as distance detecting means) having inputted therein the image taken by the camera unit **13.** As shown in **20,** the swing compensation image processing unit **14** includes, in addition to the elements defined in the fourth embodiment, a polygon apex synthesizing unit **112** for selecting the images taken in the vicinity of peaks of the timing signal received from the oscillation means **121,** and a switching unit **122** needed to have a polygon image synthesizing unit **113** synthesize swing-compensated image.

FIG. **21(b)** is an explanation showing the swing of the camera unit **13.** The camera unit **13** is swung by the oscillation means **121** in response to the timing signal. More specifically, the camera unit **13** is adapted to take images within respective intervals **142** to **147,** while the oscillation means **121** is adapted to swing the camera unit **13** with a frequency of 30 cycles per second.

From the foregoing description, it will be understood that the operation support device according to the fifth embodiment of the present invention can detect an obstacle **132** in the field angle of the camera unit **13** while swinging the camera unit **13,** by judging whether or not the predictive image corresponds to the swing-compensated image on the special distance plane spaced apart from the road surface **19.**

From the foregoing description, it will be understood that the operation support device according to the fifth embodiment of the present invention can detect at a relatively high accuracy whether or not there is an obstacle in the field angle of the camera unit **13** under the condition that the camera unit **13** is being actively swung with the rod portion **12** even if the automotive vehicle **11** is in stopped state.

As shown in FIG. **20,** the images taken in the vicinity of peaks of the timing signal received from the oscillation means **121** are selected by a switching unit **122** in response to the timing signal received from the oscillation means **121.** The swing-compensated image **93** is synthesized by the polygon apex synthesizing unit **112** and the polygon image synthesizing unit **113.**

The images taken within intervals **142** to **147** shown in FIG. **21(b)** are selected as images taken in the vicinity of peaks of the timing signal. In this case, the swing-compensated images to be outputted as thirty frames moving images per second are synthesized from the images taken within intervals **142** to **147.**

From the foregoing description, it will be understood that the operation support device according to the present invention can detect the distance of the special distance plane to the camera unit **13** at a relatively high accuracy by reason that the oscillation means **121** is adapted to swing the camera unit **13** with the rod-like retaining unit **12,** and to judge whether the special distance plane is on the road surface **19,** or on the obstacle.

Accordingly, the operation support device according to the present invention can output a swing-compensated image **93** to be displayed at a relatively high quality without being affected by the swing of the camera unit **13** by canceling the effect of the swing of the camera unit **13** caused by the oscillation means **121,** this swing-compensated image **93** is substantially the same in quality as the image compensated in the fourth embodiment.

INDUSTRIAL APPLICABILITY OF THE PRESENT INVENTION

As will be seen from the foregoing description, the present invention has an effect of producing an image to be displayed at a relatively high quality without being affected by the swing of the rod-like retaining means. The present invention is available as an operation support device for assisting a driver by taking and displaying an image indicative of one or more objects located around the automotive vehicle.

**Claims**

1. An operation support device, comprising:

   retaining means (12) in the form of a rod and projected from an automotive vehicle (11);
   image taking means (13) mounted on and retained by said retaining means to take images of objects around said automotive vehicle; and
   swing compensation image processing means (14) for processing said images taken by said image taking means with a swing compensation for a swing on a special distance plane distant from said image taking means.

2. An operation support device as set forth in claim 1, in which said swing compensation image processing means (14) is adapted to detect a rotational swing and a positional swing of said image taking means (13) mounted on said retaining means (12) by chasing particular points on said automotive vehicle (11), and to compensate said image by canceling the effect of said rotational swing and said positional swing of said image taking means on said special distance plane.

3. An operation support device as set forth in claim 1, which further comprises detecting means (31, 81) for detecting a rotational swing and a positional swing of said image taking means (13), and in which said swing compensation image processing means (14) is adapted to compensate said image by canceling the effect of said rotational swing and said positional swing of said image taking means on said special distance plane.

4. An operation support device as set forth in claim 1, in which said swing compensation image processing means (14) is adapted to perform a projective transformation of said taken image to an image projected on a special distance plane before performing an inverse projective transformation to an image to be outputted as an image taken with no swing by an imaginary image taking means (42).

5. An operation support device as set forth in any one of claims 1 to 4, which further comprises distance means (14) for detecting a distance between said object and said image taking means, and in which said swing compensation image processing means (14) is adapted to change said special distance plane on the basis of said distance between said object and said image taking means (13).

6. An operation support device as set forth in claim 1, in which said swing compensation image processing means (14) is adapted to produce images compensated on respective distance planes by canceling the effect of said rotational swing and said positional swing of said image taking means (13) on said distance planes, and to select, as an image to be synthesized, one of said images compensated on said respective distance planes by judging whether or not each of said images compensated on said respective distance planes corresponds to an predictive image which is produced from one or more prior images on the basis of a movement of said automotive vehicle (11).

**7.** An operation support device as set forth in claim 1, which further comprises oscillation means (121) for swinging said retaining means (12), and in which said swing compensation image processing means (14) is adapted to detect said special distance plane with the swing of said image taking means under the condition that said retaining means is being swung by said oscillation means.

**8.** An operation support device as set forth in claim 1, which further comprises displaying means (15) for displaying said image taken by said image taking means (13).


**Patentansprüche**

**1.** Betriebsunterstützungsvorrichtung, aufweisend:

Haltemittel (12) in der Form einer Stange und vorstehend bei einem Kraftfahrzeug (11);
Bildaufnahmemittel (13), angebaut an und gehalten von dem Haltemittel zum Aufnehmen von Bildern von Objekten rund um das Kraftfahrzeug; und
Schwingungskompensations-Bildbearbeitungsmittel (14) zum Bearbeiten der mit dem Bildaufnahmemittel aufgenommenen Bilder mit einer Schwingungskompensation für eine Schwingung auf einer speziellen Abstandsebene, die vom Bildaufnahmemittel entfernt ist.

**2.** Betriebsunterstützungsvorrichtung nach Anspruch 1, wobei das Schwingungskompensations-Bildbearbeitungsmittel (14) angepasst ist zum Erkennen eines (12) montierten Bildaufnahmemittels (13) durch Verfolgen bestimmter Punkte auf dem Kraftfahrzeug (11) und zum Kompensieren des Bilds durch Aufheben der Wirkung der rotationsbezogenen Schwingung und der positionsbezogenen Schwingung des Bildaufnahmemittels auf der speziellen Abstandsebene.

**3.** Betriebsunterstützungsvorrichtung nach Anspruch 1, ferner aufweisend Erkennungsmittel (31, 81) zum Erkennen einer rotationsbezogenen Schwingung und einer positionsbezogenen Schwingung des Bildaufnahmemittels (13), und wobei das Schwingungskompensations-Bildbearbeitungsmittel (14) angepasst ist zum Kompensieren des Bildes durch Aufheben der Wirkung der rotationsbezogenen Schwingung und der positionsbezogenen Schwingung des Bildaufnahmemittels auf der speziellen Abstandsebene.

**4.** Betriebsunterstützungsvorrichtung nach Anspruch 1, wobei das Schwingungskompensations-Bildbearbeitungsmittel (14) angepasst ist zum Durchführen einer projektiven Transformation des aufgenommenen Bildes in ein auf eine spezielle Abstandsebene projiziertes Bild vor Durchführen einer inversen projektiven Transformation in ein Bild für Ausgabe als ein ohne Schwingungen durch ein imaginäres Bildaufnahmemittel (42) aufgenommenes Bild.

**5.** Betriebsunterstützungsvorrichtung nach einem der Ansprüche 1 bis 4, ferner aufweisend Abstandmittel (14) zum Erkennen eines Abstands zwischen dem Objekt und dem Bildaufnahmemittel, und wobei das Schwingungskompensations-Bildbearbeitungsmittel (14) angepasst ist für ein Ändern der speziellen Abstandsebene auf Basis des Abstands zwischen dem Objekt und dem Bildaufnahmemittel (13).

**6.** Betriebsunterstützungsvorrichtung nach Anspruch 1, wobei das Schwingungskompensations-Bildbearbeitungsmittel (14) angepasst ist zum Erzeugen von auf den jeweiligen Abstandsebenen kompensierten Bildern durch Aufheben der Wirkung der rotationsbezogenen Schwingung und der positionsbezogenen Schwingung des Bildaufnahmemittels (13) auf den speziellen Abstandsebenen durch Beurteilen, ob jedes der auf den jeweiligen Abstandsebenen kompensierten Bilder einem voraussagenden Bild, das von einem oder mehreren früheren Bildern auf Basis einer Bewegung des Kraftfahrzeugs (11) erzeugt worden ist, entspricht oder nicht.

**7.** Betriebsunterstützungsvorrichtung nach Anspruch 1, ferner aufweisend Oszilliermittel (121) zum Schwingen des Haltemittels (12), und wobei das Schwingungskompensations-Bildbearbeitungsmittel (14) angepasst ist für ein Erkennen der speziellen Abstandsebene mit dem Schwingen des Bildaufnahmemittels unter der Voraussetzung, dass das Haltemittel durch das Oszilliermittel geschwungen wird.

**8.** Betriebsunterstützungsvorrichtung nach Anspruch 1, ferner aufweisend Anzeigemittel (15) zum Anzeigen des mit dem Bildaufnahmemittel (13) aufgenommenen Bildes.

**Revendications**

1. Dispositif de support de fonctionnement, comprenant :

   un moyen de retenue (12) sous forme d'une tige et projeté à partir d'un véhicule automobile (11) ;
   un moyen de prise d'image (13) monté sur ledit moyen de retenue et retenu par celui-ci pour prendre des images d'objets autour dudit véhicule automobile ; et
   un moyen de traitement d'image par compensation de balancement (14) pour traiter lesdites images prises par ledit moyen de prise d'image avec une compensation de balancement pour un balancement sur un plan de distance spécial éloigné dudit moyen de prise d'image.

2. Dispositif de support de fonctionnement selon la revendication 1, dans lequel ledit moyen de traitement d'image par compensation de balancement (14) est adapté pour détecter un balancement de rotation et un balancement de position dudit moyen de prise d'image (13) monté sur ledit moyen de retenue (12) en poursuivant des points particuliers sur ledit véhicule automobile (11), et pour compenser ladite image en annulant l'effet dudit balancement de rotation et dudit balancement de position dudit moyen de prise d'image sur ledit plan de distance spécial.

3. Dispositif de support de fonctionnement selon la revendication 1, qui comprend en outre un moyen de détection (31, 81) pour détecter un balancement de rotation et un balancement de position dudit moyen de prise d'image (13), et dans lequel ledit moyen de traitement d'image par compensation de balancement (14) est adapté pour compenser ladite image en annulant l'effet dudit balancement de rotation et dudit balancement de position dudit moyen de prise d'image sur ledit plan de distance spécial.

4. Dispositif de support de fonctionnement selon la revendication 1, dans lequel ledit moyen de traitement d'image par compensation de balancement (14) est adapté pour réaliser une transformation projective de ladite image prise en une image projetée sur un plan de distance spécial avant de réaliser une transformation projective inverse en une image devant être délivrée en sortie en tant qu'image prise sans aucun balancement par un moyen de prise d'image imaginaire (42).

5. Dispositif de support de fonctionnement selon l'une quelconque des revendications 1 à 4, qui comprend en outre un moyen de distance (14) pour détecter une distance entre ledit objet et ledit moyen de prise d'image, et dans lequel ledit moyen de traitement d'image par compensation de balancement (14) est adapté pour changer ledit plan de distance spécial sur la base de ladite distance entre ledit objet et ledit moyen de prise d'image (13).

6. Dispositif de support de fonctionnement selon la revendication 1, dans lequel ledit moyen de traitement d'image par compensation de balancement (14) est adapté pour produire des images compensées sur des plans de distance respectifs en annulant l'effet dudit balancement de rotation et dudit balancement de position dudit moyen de prise d'image (13) sur lesdits plans de distance, et pour sélectionner, en tant qu'image devant être synthétisée, l'une desdites images compensées sur lesdits plans de distance respectifs en jugeant si chacune desdites images compensées sur lesdits plans de distance respectifs correspond à une image prédictive qui est produite à partir d'une ou de plusieurs image(s) précédente(s) sur la base d'un mouvement dudit véhicule automobile (11) ou non.

7. Dispositif de support de fonctionnement selon la revendication 1, qui comprend en outre un moyen d'oscillation (121) pour faire balancer ledit moyen de retenue (12), et dans lequel ledit moyen de traitement d'image par compensation de balancement (14) est adapté pour détecter ledit plan de distance spécial avec le balancement dudit moyen de prise d'image à condition que ledit moyen de retenue soit balancé par ledit moyen de d'oscillation.

8. Dispositif de support de fonctionnement selon la revendication 1, qui comprend en outre un moyen d'affichage (15) pour afficher ladite image prise par ledit moyen de prise d'image (13) .

# FIG.1

(a)

(b)

# FIG.2

(a)

(b)

# FIG.3

# FIG.4

(a)

(b)

# FIG.5

(a)

(b)

# FIG.6

(a)

(b)

# FIG.7

FIG.8

# FIG.9

APEXES OF POLYGONS ON INPUTTED IMAGE —51

55— SHADING

34
SWING INFORMATION

POLYGON-APEX-COORDINATES PROJECTIVE TRANSFORMATION UNIT

LENS DATA ~36

INITIAL POSITION DATA ~38

19
ROAD SURFACE

52

56— SHADING

35
INPUTTED IMAGE

POLYGON IMAGE SYNTHESIZING UNIT

POLYGON-APEX-COORDINATES INVERSE PROJECTIVE TRANSFORMATION UNIT

LENS DATA ~37

IMAGINARY VIEW POINT DATA ~40

SWING COMPENSATED IMAGE

45

54

53

EP 1 718 062 B1

# FIG.10

(a)

(b)

(c)

EP 1 718 062 B1

# FIG.11

(a)

(b)

# FIG.12

# FIG.13

(a)

(b)

# FIG.14

(a)

(b)

# FIG.15

APEXES OF
POLYGONS ON
INPUTTED
IMAGE — 51

55 — SHADING

LENS DATA — 36

34
SWING
INFORMATION

POLYGON-APEX-
COORDINATES
PROJECTIVE
TRANSFORMATION
UNIT

INITIAL
POSITION
DATA — 38

88

35
INPUTTED
IMAGE

87
DISTANCE PLANES: ROAD
SURFACE, H1,H2, and H3

56 — SHADING

120
SWING
COMPENSATED
IMAGES

POLYGON
IMAGE
SYNTHESIZING
UNIT

POLYGON-APEX-
COORDINATES
INVERSE PROJECTIVE
TRANSFORMATION
UNIT

LENS DATA — 37

91
MOVEMENT
ANALYZING
UNIT

94

IMAGINARY
VIEW POINT
DATA — 40

96

MEMORY UNIT

90

89

STEERING
ANGLE
INFORMATION

95
VEHICLE-
MOVEMENT
ESTIMATING
UNIT

PREDICTIVE
IMAGE
PRODUCING
UNIT

WHEEL ANGLE
INFORMATION

92

109

97

98

OBSTACLE
WARNING

SWING
COMPENSATED
IMAGE

JUDGING IMAGE
SYNTHESIZING
UNIT

93

EP 1 718 062 B1

FIG.16

# FIG.17

(a)

(b)

# FIG.18

- APEXES OF POLYGONS ON INPUTTED IMAGE — 51
- 55 — SHADING
- SWING INFORMATION — 34
- POLYGON-APEX-COORDINATES PROJECTIVE TRANSFORMATION UNIT
- LENS DATA — 36
- INITIAL POSITION DATA — 38
- 88
- INPUTTED IMAGE — 35
- DISTANCE PLANES: ROAD SURFACE, H1,H2, and H3 — 87
- 56 — SHADING
- MOVEMENT ANALYZING UNIT — 91
- SWING COMPENSATED IMAGES — 120
- POLYGON IMAGE SYNTHESIZING UNIT
- POLYGON-APEX-COORDINATES INVERSE PROJECTIVE TRANSFORMATION UNIT
- LENS DATA — 37
- IMAGINARY VIEW POINT DATA — 40
- STEERING ANGLE INFORMATION — 96
- MEMORY UNIT — 94
- 90
- 89
- VEHICLE-MOVEMENT ESTIMATING UNIT — 95
- PREDICTIVE IMAGE PRODUCING UNIT
- 109
- WHEEL ANGLE INFORMATION
- 98
- OBSTACLE WARNING
- 97
- JUDGING UNIT
- 111
- SWING COMPENSATED IMAGE — 93
- POLYGON IMAGE SYNTHESIZING UNIT
- 113
- POLYGON APEX SYNTHESIZING UNIT — 112

# FIG.19

(a)

(b)

# FIG.20

# FIG.21

(a)

(b)

AMPLITUDE

TIME

# FIG.22

# FIG.23

**EP 1 718 062 B1**

**REFERENCES CITED IN THE DESCRIPTION**

**Patent documents cited in the description**

- JP 2036417 A
- JP 2003063310 A
- JP 9312836 A